# EUROPEAN PATENT SPECIFICATION

(11) **EP 1 742 385 B1**
(45) Date of publication and mention of the grant of the patent: **13.01.2010**
(21) Application number: 06076160.8
(22) Date of filing: 02.06.2006
(51) Int. Cl.: H04B 7/185

(54) **Method and system to acquire customizable data in a satellite radio system**
Verfahren und Anordnung zum Erfassen anpassbaren Daten in einem Satellitenfunkhörsystem.
Méthode et système pour acquérir des données personalisables dans un système radio par satellite

(30) Priority: 13.06.2005 US 151612
(43) Date of publication of application: 10.01.2007
(73) Proprietor: Delphi Technologies, Inc., Troy, Michigan 48007 (US)
(72) Inventor: Dibiaso, Eric A., Kokomo, IN 46901 (US); Patel, Jayesh S., Warren, NJ 07059 (US)
(74) Representative: Denton, Michael John

(56) References cited:
- EP-A- 1 211 822
- EP-A- 1 632 873
- EP-A- 1 659 714
- US-B1- 6 563 805
- US-B1- 6 876 835
- US-B2- 6 564 003

## Description

### TECHNICAL FIELD

The present invention generally relates to the transmission of digital data, and more particularly, to the transmission of digital data in a satellite digital audio radio ("SDAR") system.

### BACKGROUND OF THE INVENTION

In October of 1997, the Federal Communications Commission (FCC) granted two national satellite radio broadcast licenses. In doing so, the FCC allocated twenty-five (25) megahertz (MHz) of the electromagnetic spectrum for satellite digital broadcasting, twelve and one-half (12.5) MHz of which are owned by XM Satellite Radio, Inc. of Washington, D.C. (XM), and 12.5 MHz of which are owned by Sirius Satellite Radio, Inc. of New York City, N.Y. (Sirius). Both companies provide subscription-based digital audio that is transmitted from communication satellites, and the services provided by these and other SDAR companies are capable of being transmitted to both mobile and fixed receivers on the ground.

In the XM satellite system, two (2) communication satellites are present in a geostationary orbit ― one satellite is positioned at longitude 115 degrees (west) and the other at longitude eighty-five (85) degrees (east). Accordingly, the satellites are always positioned above the same spot on the earth. In the Sirius satellite system, however, three (3) communication satellites are present that all travel on the same orbital path, spaced approximately eight (8) hours from each other. Consequently, two (2) of the three (3) satellites are "visible" to receivers in the United States at all times. Since both satellite systems have difficulty providing data to mobile receivers in urban canyons and other high population density areas with limited line-of-sight satellite coverage, both systems utilize terrestrial repeaters as gap fillers to receive and rebroadcast the same data that is transmitted in the respective satellite systems.

The SDAR digital data stream, which is comprised of multiplexed audio and data channels, is uplinked to the satellites for frequency translation and transmission to both mobile and fixed SDAR receivers. Repeaters on the ground retransmit the satellite signal for receivers in metropolitan areas that may not have received a clear satellite signal. Conventional satellite providers in North America encrypt the digital signals so that only subscribing SDAR receivers may properly decrypt the digital audio or data information.

SDAR receivers are available for many mobile applications. For example, units are available for automobiles and boats. Also, SDAR receivers may be coupled to conventional stereo equipment, and may be installed in the mobile applications by hard-wiring or by transmitting the desired signal to the mobile environment's existing radio. While a base portion of these systems may be hand-held and portable, typically additional hardware in the form of an antenna and a sound system interface are needed to receive and reproduce the content delivered via satellite.

Many types of personal sized portable units include a digital audio player, such as an MP3 player. These units typically have a memory storage device and an audio reproduction unit. The memory obtains content, typically songs encoded in MP3 format, through a computer that has a source of MP3 files. Typically, the computer obtains the MP3 files by converting digital audio stored on a conventional audio compact disk, or obtains digital audio files from another computer such as through a network, i.e. the Internet.

A personal sized portable unit is available that has memory to store and replay digital audio information transmitted via satellite. This allows for an owner of a personal, portable SDAR receiver to receive and replay songs or programs transmitted via satellite. This type of unit provides the owner with a variety of content delivered by the several available stations broadcast by the satellite. US-B-6 876 835 discloses a player in accordance with the preamble of Claim 1.

### SUMMARY OF THE INVENTION

The present invention provides an apparatus and method for providing additional digital data to an SDAR receiver to allow user customization in an SDAR system. The invention involves providing an SDAR receiver with interfacing circuitry and a user interface to allow for user selected content to be delivered to the SDAR receiver. This allows the use of existing SDAR receiver designs in conjunction with a computer interface module to provide both the variety of content available through satellite broadcasts with the user specific content available through conventional digital audio players.

In one embodiment, digital files in a satellite format are provided through a computer interface to the SDAR receiver. In another embodiment of the invention, conventional digital data files are provided through a computer interface encoded in the satellite format for playing by the SDAR receiver. The digital data files may be originally stored in the SDAR format in one embodiment, and in another embodiment the data files are converted to SDAR format on demand.

In another embodiment of the invention, the computer interface is a wireless interface, such as a WiFi, Bluetooth, IR, or other wireless communication technology. In another embodiment, the computer interface is a direct connection to a computer or computer network. The computer interface provides the mechanism by which the additional data specified by the user may be obtained.

Existing SDAR digital formatted data may thus be delivered through conventional SDAR signals. The same SDAR digital formatted data may be created by a computer from another digital data source, for example from a CD-ROM formatted data file, an MP3 formatted data file, or a DVD formatted data file. In one embodiment, a library of digital audio files in SDAR formatted data is provided through a computer network for delivering specified content to the an SDAR receiver, for example a hand held SDAR receiver. In another embodiment, the computer interface is used to create SDAR formatted digital audio files from existing audio files in other formats, for use on an SDAR receiver.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:
Figure 1 is a schematic diagram of a SDAR receiver in accordance with the present invention.
Figure 2 is a block diagram of a SDAR file management system adapted to enable a method of the present invention.
Figure 3 is a block diagram of a SDAR file converter of the present invention.

### DESCRIPTION OF THE PREFERRED EMBODIMENTS

The embodiments disclosed below are not intended to be exhaustive or limit the invention to the precise forms disclosed in the following detailed description. Rather, the embodiments are chosen and described so that others skilled in the art may utilize their teachings.

For the purposes of the present invention, certain terms shall be interpreted in accordance with the following definitions.

Baseband: A signal whose frequency content is in the vicinity of direct current (DC).

Carrier: A single frequency electromagnetic wave the modulations of which are used as communications signals.

Channel: A propagation medium for communication such as a path along which information in the form of an electrical signal passes (e.g., wire, air, water).

Data rate: The amount of data, or number of symbols, which may be transmitted on a signal per a unit of time.

Detector: A circuit that is capable of determining the content of a signal.

Downconvert: To convert a radio frequency signal from a higher to a lower frequency signal for processing (i.e., to baseband).

Downlink: To transmit data from a satellite to a receiver on earth.

Legacy receiver: A current or existing SDAR receiver that is capable of interpreting SDAR data.

Quadrature: A method of coding information that groups data bits and transmits two separate signals on a carrier by summing the cosine and sine of the separate signals to produce a composite signal which may be later demodulated to recover both signals.

Second Generation Receiver: A SDAR receiver that contains hardware and/or software enabling the receiver to interpret SDAR data from sources other that a satellite transmitter or a repeater (e.g., from electronic memory or over an internet connection).

Signal: A detectable physical quantity or impulse by which information can be transmitted.

Symbol: A unit of data (byte, floating point number, spoken word, etc.) that is treated independently.

Upconvert: To convert from a lower frequency signal (i.e., baseband) to a higher radio frequency signal for broadcasting.

Uplink: A communications channel or facility on earth for transmission to a satellite, or the communications themselves.

Upmix: To combine multiple electrical signals to a radio frequency signal for broadcasting.

Waveform: A representation of the shape of a wave that indicates its characteristics (frequency and amplitude).

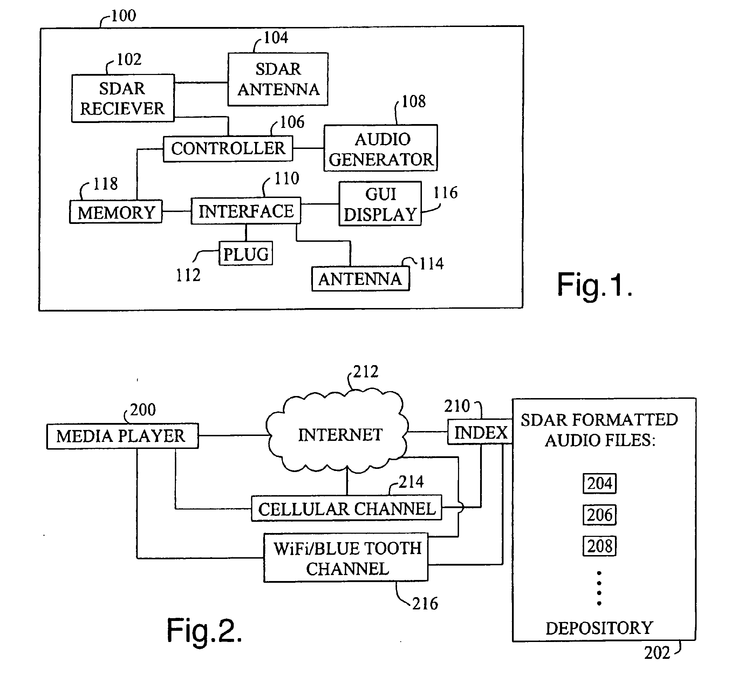

Figure 1 illustrates a block diagram of a SDAR receiver system in which two different data sources may be utilized, in this example one of the data sources involves the modulation signals from the satellite or repeater and the other data source involves an electronic storage medium. In an exemplary embodiment of the current invention, SDAR receiver system 100 includes SDAR receiver 102 having SDAR antenna 104 which may have a conventional design to receive SDAR signals and provide demodulated digital audio data from the received SDAR signals. Controller 106 may provide a suitable audio signal to audio generator 108, for example by controller 106 performing a digital to audio conversion and audio generator being a conventional speaker. Alternatively, controller 106 may provide a digital signal in a SDAR format which is converted into audio output by audio generator 108.

In accordance with the present invention, system 100 further includes interface 110 for obtaining SDAR formatted digital audio information from a source other than an SDAR broadcast. Interface 110 accesses such SDAR formatted digital audio information through one or more of plug 112 and/or antenna 114. Plug 112 may be configured to be attached to an ethernet connection, a memory card or stick, or other device with which interface 110 is configured to access via a physical connection. Antenna 114 may be configured for receiving 802.11 wireless fidelity type communications (WiFi), Bluetooth short-range radio technology, or cellular based communications, with interface 110 being configured to appropriately decode or demodulate signals received by antenna 114 with appropriate circuitry. Interface 110 also includes a user input allowing the user to specify the desired song, which in the illustrated embodiment is graphic user interface (GUI) display 116 but may alternatively be a keyboard, a voice recognition module, or other data entry device. When a digital audio file in SDAR format is received, such a file may be stored in memory 118. In addition, memory 118 may include stored data files with SDAR formatted digital audio files.

The present invention uses a delivery scheme shown in Figure 2. Media player 200 may have all the components of SDAR receiver 100 of Figure 1, or alternatively may lack SDAR receiver 102 and SDAR antenna 104 but have the remaining components. Depository 202 may contain SDAR formatted digital audio files 204, 206, 208, etc. which may be accessed through index 210. The user inputs a file request (e.g., a song title or reference number) into media player 200, and transmits such a request over a wired (e.g., internet 212) or wireless (e.g., cellular channel 214 or WiFi/Bluetooth channel 216) connection. Wireless connections may be routed through internet 212, or may be more directly connected to index 210.

Alternatively, depository 202 may contain digital audio files 204, 206, 208, etc. in other formats (e.g., CD-ROM format, MP3 format, PCM format, DVD format, or other proprietary format) which may be converted through known algorithms to the SDAR format. Further, depository 202 may receive digital audio files from a user (e.g., via an uploaded file, a peer to peer transfer, an e-mailed file, or a hyperlink referenced file) for conversion to SDAR format. Depository 202 may be a generally accessible location on a wide area network (WAN) or the Internet, or alternatively depository 202 may be a resource on a user's computer, on a proprietary network, or on a local area network (LAN).

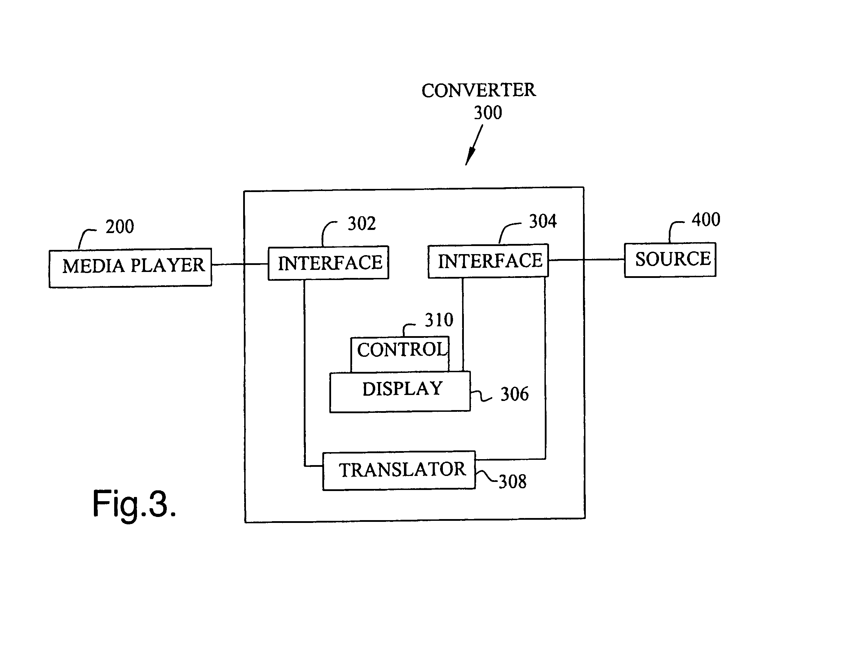

In another embodiment of the invention, a device is provided for creating SDAR compatible audio files from existing audio files in other formats. Figure 3 shows converter 300 providing SDAR compatible audio files to media player 200 from source 400. Source 400 may be a communications link like internet 212, cellular channel 214, and/or WiFi/Bluetooth channel 216. Alternatively, source 400 may be a depository such as a personal computer with audio data files, a CD or DVD player, a memory stick, or other device capable of storing digital audio files. Converter 300 has interface 304 adapted to connect with source 400. Control 310 may determine the audio files available on source 400 and present those choices to the user on display 306. Once control 310 determines the desired audio file(s) from source 400, such files are obtained by interface 304 and provided to translator 308 to convert the format of the audio data file to an SDAR compatible format. Once translated, the SDAR compatible file is transferred via interface 302 to media player 200. Converter 300 may be implemented as a processor based device with all the algorithmic processing hosted internally in control 310, alternatively some or all of the algorithmic processing may be performed by software in source 400 or media player 200. In another embodiment, converter 300 may be implemented as a dedicated circuit chip as control 310 with connecting wires embodying interfaces 302 and 304, with display 306 residing in media player 200 or source 400. A variety of hardware/software combinations are possible to convert audio files is different formats to SDAR format on demand.

## Claims

1. A media player (200) comprising:
a satellite radio receiver (102) configured to receive a satellite digital audio radio (SDAR) broadcast signal, and audio circuitry (108) coupled to said satellite radio receiver for reproducing sound from signals provided by said satellite radio receiver; and **characterized by**
a computer interface circuit (110) coupled to said audio circuitry configured for accessing external audio information files accessed from a source other than a source of said SDAR broadcast, wherein the external audio information files are SDAR formatted.

2. The media player (200) of claim 1 further comprising memory (118) coupled to say audio circuitry (108).

3. The media player (200) of claim 1 further comprising a display (116).

4. The media player (200) of claim 3 wherein said computer interface circuit (110) includes software enabling said display to receive commands regarding selection of audio information files.

5. The media player (200) of claim 1 wherein said computer interface circuit (110) includes wireless transmission circuitry (114).

6. The media player (200) of claim 5 wherein said wireless transmission circuitry (114) includes at least one of WiFi, Bluetooth, and cellular modem transmission circuitry.

7. The media player (200) of claim 6 further including a second antenna configured for said wireless transmission circuitry (114).

8. The media player (200) of claim 1 wherein said computer interface circuitry (110) is configured for network communications.

9. The media player (200) of claim 4 wherein said software is configured for TCP/IP communications.

10. The media player (200) of claim 1 wherein said computer interface circuitry (110) includes a connector (112).

11. The media player (200) of claim 10 further including a docking station adapted to connect to a computer, said docking station including a receiving portion adapted to receive said connector.

12. A satellite radio receiver (100) comprising:
an antenna (104) adapted for reception of satellite radio signals configured to receive a satellite digital audio radio (SDAR) broadcast signal, a satellite radio receiver (102) coupled to said antenna (104), and audio circuitry (108) coupled to said satellite radio receiver (102) for reproducing sound from signals provided by said satellite radio receiver (102); and **characterized by**
a computer interface circuit (110) coupled to said audio circuitry (108) for accessing external audio information files accessed from a source other than said SDAR broadcast, wherein the external audio information files are SDAR formatted.

13. The receiver (100) of claim 12 further comprising memory (118) coupled to said audio circuitry (108).

14. The receiver (100) of claim 12 further comprising a display (116).

15. The receiver (100) of claim 14 wherein said computer interface circuit (110) includes software enabling said display (116) to receive commands regarding selection of audio information files.

16. The receiver (100) of claim 12 wherein said computer interface circuit (110) includes wireless transmission circuitry (114).

17. The receiver (100) of claim 16 wherein said wireless transmission circuitry (114) includes at least one of WiFi, Bluetooth, and cellular modem transmission circuitry.

18. The receiver (100) of claim 17 further including a second antenna configured for said wireless transmission circuitry (114).

19. The receiver (100) of claim 12 further comprising computer interface circuitry (110) is configured for network communications.

20. The receiver (100) of claim 15 wherein said software is configured for TCP/IP communications.

21. The receiver (100) of claim 12 wherein said computer interface circuitry (110) includes a connector (112).

22. The receiver (100) of claim 21 further including a docking station adapted to connect to a computer, said docking station including a receiving portion adapted to receive said connector.

23. A method of providing satellite digital audio radio (SDAR) formatted digital audio files to a SDAR enabled media player (200), comprising the steps of:
receiving an SDAR broadcast signal; and **characterized by**
accessing a source of external digital audio files with an interface (110) of the media player (200), wherein the source is other than the SDAR broadcast, and playing a SDAR formatted digital audio file with the media player (200), wherein the external digital audio files are SDAR formatted.

24. The method of claim 23 wherein the accessing step involves using at least one of WiFi, Bluetooth, and cellular modem transmission.

25. The method of claim 23 wherein the accessing step involve using a network protocol.

26. The method of claim 23 further comprising the step of translating a selected digital audio file to an SDAR compatible format.

27. The method of claim 23 wherein the accessing step includes selecting a desired digital audio file.

## Patentansprüche

1. Media-Spieler (200), der aufweist:
einen Satellitenfunkempfänger (102), der konfiguriert ist, ein SDAR(Satellite Digital Audio Radio)-Broadcast-Signal zu empfangen, und Audioschaltungen (108), die mit dem Satellitenfunkempfänger verbunden sind, zum Wiedergeben von Ton aus den Signalen, die durch den Satellitenfunkempfänger geliefert werden; und **gekennzeichnet durch**
eine Computerschnittstellenschaltung (110), die mit den Audioschaltungen verbunden ist und konfiguriert ist zum Zugreifen auf externe Audioinformationsdateien, auf die zugegriffen wird von einer Quelle, die von einer Quelle des SDAR-Broadcasts verschieden ist, wobei die externen Audioinformationsdateien SDAR-formatiert sind.

2. Media-Spieler (200) gemäß Anspruch 1, der weiter einen Speicher (118) aufweist, der mit den Audioschaltungen (108) verbunden ist.

3. Media-Spieler (200) gemäß Anspruch 1, der weiter eine Anzeige (116) aufweist.

4. Media-Spieler (200) gemäß Anspruch 3, wobei die Computerschnittstellenschaltung (110) eine Software umfasst, die ermöglicht, dass die Anzeige Befehle hinsichtlich einer Auswahl der Audioinformationsdateien empfängt.

5. Media-Spieler (200) gemäß Anspruch 1, wobei die Computerschnittstellenschaltung drahtlose Übertragungsschaltungen (114) umfasst.

6. Media-Spieler (200) gemäß Anspruch 5, wobei die drahtlosen Übertragungsschaltungen (114) zumindest eines umfassen aus WiFi, Bluetooth und zellularen Modem-Übertragungsschaltungen.

7. Media-Spieler (200) gemäß Anspruch 6, der weiter eine zweite Antenne umfasst, die für die drahtlosen Übertragungsschaltungen (114) konfiguriert ist.

8. Media-Spieler (200) gemäß Anspruch 1, wobei die Computerschnittstellenschaltungen (110) für Netzwerkkommunikationen konfiguriert sind.

9. Media-Spieler (200) gemäß Anspruch 4, wobei die Software für TCP/IP-Kommunikationen konfiguriert ist.

10. Media-Spieler (200) gemäß Anspruch 1, wobei die Computerschnittstellenschaltungen (110) einen Verbindungsteil (112) umfassen.

11. Media-Spieler (200) gemäß Anspruch 10, der weiter eine Andockstation umfasst, die ausgebildet ist, mit einem Computer verbunden zu werden, wobei die Andockstation einen Aufnahmeteil umfasst, der ausgebildet ist, das Verbindungsteil aufzunehmen.

12. Satellitenfunkempfänger (100), der aufweist:
eine Antenne (104), die ausgebildet ist zum Empfang von Satellitenfunksignalen, konfiguriert zum Empfang eines SDAR(Satellite Digital Audio Radio)-Broadcast-Signals, einen Satellitenfunkempfänger (102), der mit der Antenne (104) verbunden ist, und Audioschaltungen (108), die mit dem Satellitenfunkempfänger (102) verbunden sind, zum Wiedergeben von Ton aus Signalen, die durch den Satellitenfunkempfänger (102) geliefert werden; und **gekennzeichnet durch**
eine Computerschnittstellenschaltung (110), die mit den Audioschaltungen (108) verbunden ist, zum Zugreifen auf externe Audioinformationsdateien, auf die zugegriffen wird von einer Quelle, die nicht der SDAR-Broadcast ist, wobei die externen Audioinformationsdateien SDAR-formatiert sind.

13. Empfänger (100) gemäß Anspruch 12, der weiter einen Speicher (118) aufweist, der mit den Audioschaltungen (108) verbunden ist.

14. Empfänger (100) gemäß Anspruch 12, der weiter eine Anzeige (116) aufweist.

15. Empfänger (100) gemäß Anspruch 14, wobei die Computerschnittstellenschaltung (110) eine Software umfasst, die ermöglicht, dass die Anzeige (116) Befehle hinsichtlich einer Auswahl der Audioinformationsdateien empfängt.

16. Empfänger (100) gemäß Anspruch 12, wobei die Computerschnittstellenschaltung drahtlose Übertragungsschaltungen (114) umfasst.

17. Empfänger (100) gemäß Anspruch 16, wobei die drahtlosen Übertragungsschaltungen (114) zumindest eines umfassen aus WiFi, Bluetooth und zellularen Modem-Übertragungsschaltungen.

18. Empfänger (100) gemäß Anspruch 17, der weiter eine zweite Antenne umfasst, die für die drahtlosen Übertragungsschaltungen (114) konfiguriert ist.

19. Empfänger (100) gemäß Anspruch 12, der weiter Computerschnittstellenschaltungen (110) aufweist, die für Netzwerkkommunikationen konfiguriert sind.

20. Empfänger (100) gemäß Anspruch 15, wobei die Software für TCP/IP-Kommunikationen konfiguriert ist.

21. Empfänger (100) gemäß Anspruch 12, wobei die Computerschnittstellenschaltungen (110) ein Verbindungsteil (112) umfassen.

22. Empfänger (100) gemäß Anspruch 21, der weiter eine Andockstation umfasst, die ausgebildet ist, mit einem Computer verbunden zu werden, wobei die Andockstation einen Aufnahmeteil umfasst, der ausgebildet ist, das Verbindungsteil aufzunehmen.

23. Verfahren zum Vorsehen von SDAR(Satellite Digital Audio Radio)-formatierten digitalen Audiodateien an einen SDAR-Media-Spieler (200), das die Schritte aufweist:
Empfangen eines SDAR-Broadcast-Signals; und **gekennzeichnet durch**
Zugreifen auf eine Quelle von externen digitalen Audiodateien mit einer Schnittstelle (110) des Media-Spielers (200), wobei die Quelle eine andere ist als der SDAR-Broadcast, und Abspielen einer SDAR-formatierten digitalen Audiodatei mit dem Media-Spieler (200), wobei die externen digitalen Audiodateien SDAR-formatiert sind.

24. Verfahren gemäß Anspruch 23, wobei der Schritt des Zugreifens ein Verwenden zumindest eines aus WiFi, Bluetooth und zellulare Modem-Übertragung umfasst.

25. Verfahren gemäß Anspruch 23, wobei der Schritt des Zugreifens ein Verwenden eines Netzwerkprotokolls umfasst.

26. Verfahren gemäß Anspruch 23, das weiter den Schritt aufweist eines Umwandelns einer ausgewählten digitalen Audiodatei in ein SDAR-kompatibles Format.

27. Verfahren gemäß Anspruch 23, wobei der Schritt des Zugreifens ein Auswählen einer gewünschten digitalen Audiodatei umfasst.

## Revendications

1. Lecteur multimédia (200) comprenant :
un récepteur radio par satellite (102) configuré pour recevoir un signal d'un émetteur radio audio numérique par satellite (SDAR), et des circuits audio (108) couplés audit récepteur radio par satellite pour reproduire un son à partir de signaux fournis par ledit récepteur radio par satellite ; et **caractérisé par**
un circuit interface ordinateur (110) couplé auxdits circuits audio et configuré pour accéder à des fichiers d'informations audio externes provenant d'une source autre qu'une source dudit émetteur SDAR, et dans lequel les fichiers d'informations audio externes sont formatés au format SDAR.

2. Lecteur multimédia (200) selon la revendication 1, comprenant en outre une mémoire (118) couplée auxdits circuits audio (108).

3. Lecteur multimédia (200) selon la revendication 1, comprenant en outre un affichage (116).

4. Lecteur multimédia (200) selon la revendication 3, dans lequel ledit circuit interface ordinateur (110) inclut un logiciel permettant audit affichage de recevoir des ordres concernant la sélection des fichiers d'informations audio.

5. Lecteur multimédia (200) selon la revendication 1, dans lequel ledit circuit interface ordinateur (110) inclut des circuits de transmission sans fil (114).

6. Lecteur multimédia (200) selon la revendication 5, dans lequel lesdits circuits de transmission sans fil (114) incluent au moins un circuit de transmission de type WiFi, Bluetooth, ou modem cellulaire.

7. Lecteur multimédia (200) selon la revendication 6, incluant en outre une seconde antenne configurée pour lesdits circuits de transmission sans fil (114).

8. Lecteur multimédia (200) selon la revendication 1, dans lequel ledit circuit interface ordinateur (110) est configuré pour des communications par réseau.

9. Lecteur multimédia (200) selon la revendication 4, dans lequel ledit logiciel est configuré pour des communications de type TCP/IP.

10. Lecteur multimédia (200) selon la revendication 1, dans lequel ledit circuit interface ordinateur (110) inclut un connecteur (112).

11. Lecteur multimédia (200) selon la revendication 10, incluant en outre une station d'accostage adaptée à être connectée à un ordinateur, ladite station d'accostage incluant une portion de réception adaptée à recevoir ledit connecteur.

12. Récepteur radio par satellite (100) comprenant :
une antenne (104) adaptée pour la réception de signaux radio par satellite configurée pour recevoir un signal d'un émetteur radio audio numérique par satellite (SDAR), un récepteur radio par satellite (102) couplé à ladite antenne (104), et des circuits audio (108) couplés audit récepteur radio par satellite (102) pour reproduire un son à partir de signaux fournis par ledit récepteur radio par satellite (102) ; et **caractérisé par**
un circuit interface ordinateur (110) couplé auxdits circuits audio (108) pour accéder aux fichiers d'informations audio externes depuis une source autre que ledit émetteur SDAR, dans lequel les fichiers d'informations audio externes sont formatés au format SDAR.

13. Récepteur (100) selon la revendication 12, comprenant en outre une mémoire (118) couplée auxdits circuits audio (108).

14. Récepteur (100) selon la revendication 12, comprenant en outre un affichage (116).

15. Récepteur (100) selon la revendication 14, dans lequel ledit circuit interface ordinateur (110) inclut un logiciel permettant audit affichage (116) de recevoir des ordres concernant la sélection des fichiers d'informations audio.

16. Récepteur (100) selon la revendication 12, dans lequel ledit circuit interface ordinateur (110) inclut des circuits de transmission sans fil (114).

17. Récepteur (100) selon la revendication 16, dans lequel lesdits circuits de transmission sans fil (114) incluent au moins un circuit de transmission de type WiFi, Bluetooth, ou modem cellulaire.

18. Récepteur (100) selon la revendication 17, incluant en outre une seconde antenne configurée pour lesdits circuits de transmission sans fil (114).

19. Récepteur (100) selon la revendication 12, comprenant en outre un circuit interface ordinateur (110) configuré pour des communications par réseau.

20. Récepteur (100) selon la revendication 15, dans lequel ledit logiciel est configuré pour des communications de type TCP/IP.

21. Récepteur (100) selon la revendication 12, dans lequel ledit circuit interface ordinateur (110) inclut un connecteur (112).

22. Récepteur (100) selon la revendication 21, incluant en outre une station d'accostage adaptée à être connectée à un ordinateur, ladite station d'accostage incluant une portion de réception adaptée à recevoir ledit connecteur.

23. Procédé pour fournir des fichiers audio numériques formatés au format radio audio numérique par satellite (SDAR) a un lecteur multimédia (200) à capacité SDAR, comprenant les étapes consistant à :
recevoir un signal d'un émetteur SDAR ; et **caractérisé par**
une étape consistant à accéder à une source de fichiers audio numériques externes avec une interface (110) du lecteur multimédia (200), ladite source étant autre que l'émetteur SDAR, et une étape consistant à exécuter un fichier audio numérique au format SDAR avec le lecteur multimédia (200), dans lequel les fichiers audio numériques externes sont formatés au format SDAR.

24. Procédé selon la revendication 23, dans lequel l'étape d'accès implique d'utiliser au moins une transmission de type WiFi, Bluetooth, ou modem cellulaire.

25. Procédé selon la revendication 23, dans lequel l'étape d'accès implique d'utiliser un protocole réseau.

26. Procédé selon la revendication 23, comprenant en outre l'étape consistant à traduire un fichier audio numérique choisir en un format compatible au format SDAR.

27. Procédé selon la revendication 23, dans lequel l'étape d'accès inclut de choisir un fichier audio numérique désiré.
